# EUROPEAN PATENT APPLICATION

(11) **EP 4 450 362 A1**
(43) Date of publication of application: **23.10.2024**
(21) Application number: 24171146.4
(22) Date of filing: 18.04.2024
(51) Int. Cl.: B61L 5/18, B61L 7/08, B61L 27/53, B61L 29/30, H04B 10/70, H04L 9/08

(54) **MONITORING AND CONTROL SYSTEM OF A FIELD RAILWAY DEVICE**

(30) Priority: 19.04.2023 IT 202300007674
(71) Applicant: Rete Ferroviaria Italiana S.p.A., 00161 Roma (IT)
(72) Inventor: Cadavero, Giuseppe, 00187 Roma (IT); Labanca, Giacomo, 00187 Roma (IT)
(74) Representative: Fiume, Orazio

(57) **Abstract**

Method of monitoring and controlling a field railway device (CdM), such as a switch or a level crossing, etc, through a central control system (ACC), the method including the following steps: acquisition of a first state of the field railway device by means of a group of electrical conductors (Mn), acquisition of a second state contemporary with the first state of the field railway device by means of a quantum key transceiver system (Alice, Bob) and then comparison of said first and second states and using of a comparison result by the central control system to decide whether to acquire or discard said first state.

## Description

### Field of the invention

The present invention relates to the field of monitoring and control systems of field railway devices, in particular of a switch.

### State of the art

Railway command and control systems include highly centralized electronic interlocks, which have, among other tasks, also that of carrying out accurate monitoring to ensure a high degree of safety in the management of railway field devices.

One of the command and control systems in the railway field is the ACC as "Computerized Central Equipment".

Among the most critical field devices, there are switches, as an incorrect configuration can lead to incorrect routing of a railway train with the risk of an accident.

In the field of railway safety and signalling systems, everybody are generally looking for a condition of absolute and not just probabilistic safety. Therefore, the various field devices, already safe in themselves, as they comply with specific European regulations, entail, in the event of a fault, the implementation, at the command and control system level, of a safe state. All field devices are continuously monitored in order to verify that their status is that expected by the system.

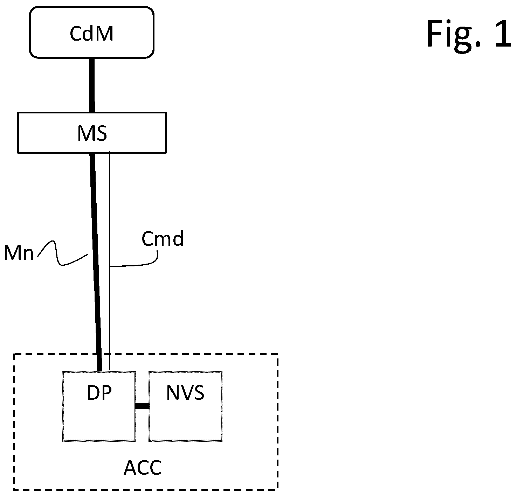

With reference to figure 1, a control box of a switch CdM is connected to the command and control system via a terminal block MS through a first group of electrical conductors Cmd necessary to control the switch operation and a second group of electrical conductors Mn useful to monitoring the state of the switch. For convenience, they will be referred to below as control wires and monitoring wires.

At the opposite ends of the two pairs of conductors there is on one side the switch control box with the respective terminal block and on the other side a peripheral device DP. This peripheral device includes electronic interface cards towards the field devices, including the switch control box CdM, signals, rail crossings, etc. The electronic interface cards present in the peripheral device DP have the task of making execute to the switch the commands sent by a Safety Unit or Vital Safety Unit or Safety Vital Core NVS, which is part of the command and control system ACC.

The Safety Unit is a control and management system for all station entities that allow railway circulation with the maximum safety requirements; it generally includes a plurality of computers in redundancy with each other, for the management of the operations that define the logic and operating methods of the railway system.

An ACC generally includes three subsystems:
- A secure unit located in a so-called central location,
- An interface system with one or more field devices, generally located in peripheral places along the railway line; the interface system is generally part of a so-called peripheral station/device DP;
- A man/machine interface located in or operationally connected to the central station.

The switch terminal block is accessible from the outside and, in case of maintenance, the electrical conductors inside it can be disconnected.

It may happen that the conductors present in the terminal block, following a disconnection operation due to maintenance, are reconnected incorrectly, giving rise to a "non-concordance" between the real position of the switch and that monitored by the control and management system. This discrepancy can cause potential dangerous situations for the movement of trains.

Unless specifically excluded in the detailed description that follows, what is described in this chapter is to be considered as an integral part of the detailed description.

### Summary of the invention

The aim of the present invention is to improve the safety of existing railway systems.

The basic idea of the present invention is to integrate a first quantum key transceiver into a field device, such as a switch control box, by operationally connecting it with a second quantum key transceiver arranged in the central place. The first transceiver is arranged to communicate to the second transceiver an operational status of the field device, and furthermore, there is a comparison device, operationally connected with
- the second transceiver and with
- the second group of electrical conductors
to compare the state of the field device and provide the Safety Unit with an estimate of the reliability of the information received from the second group of electrical conductors relating to the first operating state.

The quantum key communication system allows the first and second transceivers to detect the presence of a third party attempting to obtain key information.

In fact, any attempt to acquire the key by a third party causes the key received by the recipient to be different from that sent by the sender and therefore, the information encrypted using the above key is no longer decipherable. When this happens, according to the present invention, the comparison device safely returns to the Core a "discrepancy" signal between the data received from the monitoring conductors and the data received via the "quantum" channel. The information received, in general, appears to be potentially corrupt, activating alarm procedures that could be known in themselves and not the subject of the present invention.

According to a first preferred variant of the invention, the first and second transceivers are mutually interconnected via a first completely fiber optic transmission channel to carry out the exchange of the quantum key.

According to a second variant, the first transmission channel is at least partially implemented using a laser communication system, named PAT from the acronym "Pointing, Acquisition and Tracking", which conveniently replaces at least a portion of the fiber optic channel.

According to another variant of the invention, the second communication channel is also based on optical fiber, for example implementing an "Ethernet over fiber" type protocol or, according to a second variant, the second communication channel is of the wireless by implementing a WIFI bridge. According to a preferred variant of the invention, quantum key distribution is used only to produce and distribute the key and not also to transmit any message.

In the previously mentioned variants, the BB84 protocol is preferably implemented.

According to a further preferred variant of the invention, the second communication channel is not present while a QKR scheme is implemented in which the message is integrated in the quantum state exchanged between the first and the second transceiver via the first communication channel. Alternatively, the two fiber optic channels can be merged into a single fiber optic channel, creating any form of multiplexing, for example a time multiplexing.

The dependent claims describe preferred variations of the invention, forming an integral part of the present description.

### Brief description of the figures

Further objects and advantages of the present invention will be clear from the following detailed description of an example of its implementation (and its variants) and from the attached drawings given purely for explanatory and non-limiting purposes, in which:
Fig. 1 shows a command and monitoring architecture between a field device and a Safety Unit according to the prior art;
Fig. 2 shows a command and monitoring architecture according to the present invention;
Fig. 3 shows an exemplary flow diagram of the method of the present invention.

The same reference numbers and letters in the figures identify the same elements or components or functions.

It should also be noted that the terms "first", "second", "third", "higher", "lower" and the like may be used here to distinguish various elements. These terms do not imply a spatial, sequential, or hierarchical order for the modified elements unless specifically indicated or inferred from the text.

The elements and characteristics illustrated in the different preferred embodiments, including the drawings, can be combined with each other without departing from the scope of protection of the present application as described below.

### Detailed description

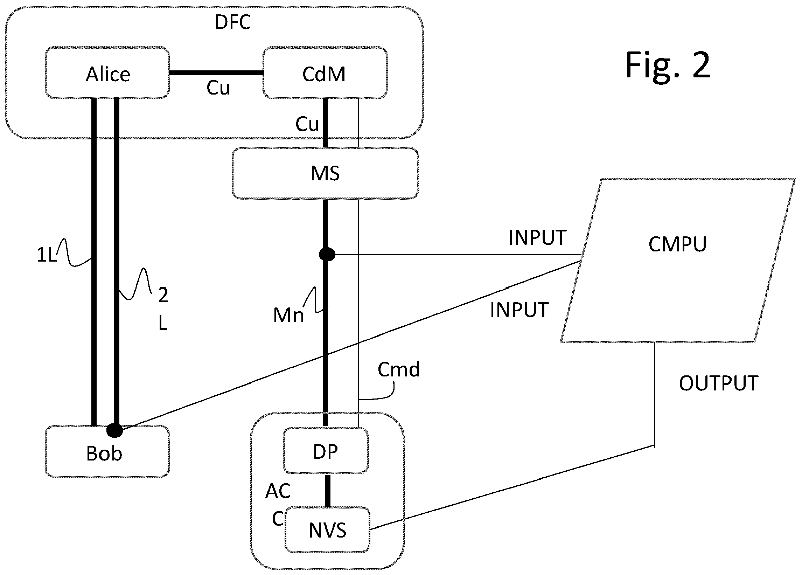

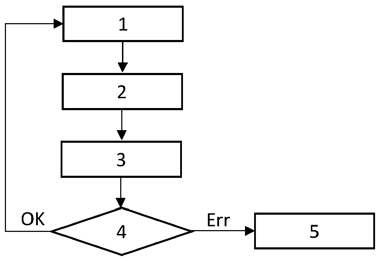

With reference to Fig. 2, a monitoring and control system of a field railway device CdM, such as a switch or a rail crossing, etc., is shown.

The system includes an ACC in which an NVS safe Vital Core is arranged and at least one peripheral device DP arranged to receive command information from the safe Vital Core to be sent to the field railway device DFC, via the command conductors CMD, and for receive from the field railway device, via the monitoring conductors Mn, a first operational state of the same field railway device to be sent to the Vital Core safely.

The peripheral device, therefore, acts as an interface between the field device and the Safety Vital Core. Generally, the control and monitoring conductors are made of copper.

As described above, the Safety Vital Core includes a plurality of computers in redundancy with each other, each of which is configured to manage logical operations defining the logics and configurations of a railway system and the related operating conditions.

For this purpose, in addition to the high security of the systems, each of the computers of the Safety Vital Core performs diagnostic tests on itself, taking known measures in case the diagnostic tests reveal anomalies.

The system, according to the present invention, comprises
- a first transceiver, named as Alice, with quantum key operationally associated directly with the field device CdM so as to acquire a second operational state from the field railway device contemporary with said first state received via the monitoring conductors and
- a second quantum key transceiver Bob operably interconnected with the first quantum key transceiver, wherein the second transceiver is arranged to receive from the first transceiver the second state of the field rail device and
- a comparison device CMPU, located in the central place, operationally connected with

. the second transceiver and with
. the monitoring conductors,
and configured to compare the first state with the second state of the field railway device and to provide an estimate of the reliability of the information received from the monitoring conductors.

The comparator can preferably be implemented using an industrial electronic board capable of satisfying the Safety Integrity Level 4 (SIL4) requirements according to the IEC 61508 and IEC 61511, EN 50128-9 standards.

The result of the comparison is provided to the Security Unit and the latter is configured to acquire or reject the information received from the second group of electrical conductors based on the reliability estimation.

Evidently, the rejection of this information is equivalent to the failure to receive the same information. This event causes predetermined actions that may be known in themselves, such as, for example, the blocking or limitation of circulation on the railway line affected by the event.

The first transceiver Alice and the second transceiver Bob are interconnected by means of a first communication channel 1L, which can be completely defined by a fiber optic connection or defined by a connection partially in fiber optics and partially based on a laser communication system, or it can be defined entirely by a laser communication system.

Alice and Bob transceivers are preferably equipped with fiber optic interfaces. These are sometimes difficult to extend for kilometers between Alice and Bob and therefore, it is possible to overcome this implementation by replacing at least a portion of the fiber optic communication channel with a laser communication device, named PAT, from the acronym "Pointing, Acquisition and Tracking". Evidently, this communication solution can take place only if there is optical visibility between the two end points of the laser connection.

When quantum key distribution communication, i.e. QKD, is implemented, in addition to the first communication channel between Alice and Bob, there is also a second 2L communication channel, which can be defined by a further group of electrical conductors for example in copper. This second channel has the purpose of allowing an exchange of information between Alice and Bob, encrypted using the key previously exchanged via the first communication channel 1L. When implementing QKD, the first and second transceivers are configured to use the first channel exclusively for an exchange of a quantum encryption key according to a QKD scheme and more precisely using the BB84 protocol and its variants.

Alternatively, the first communication channel 1L is used to exchange information according to a QKR scheme and therefore, the second communication channel 2L is not necessary. Preferably, when the first and second transceivers are configured to use the first channel for exclusive quantum encryption key exchange, the first and second transceivers are interconnected via a second 2L communication channel for information exchange, wherein the second channel includes
- a third group of electrical conductors or
- a fiber optic connection, implementing for example the "Ethernet over fiber" protocol or
- a WIFI connection.

According to a preferred aspect of the present invention, the first transceiver is inserted within an enclosure of the field device and wherein the field device includes anti-tampering means for detecting an opening of the enclosure and for inhibiting an operation of the first transceiver when the anti- tampering means detect the opening of the casing.

It is worth highlighting that the status of the field device is sent to the peripheral device DP with a predetermined frequency and when this information is missing for a predetermined duration of time, then the Safety Vital Core judges this lack as a potential fault situation.

Therefore, when any tampering is carried out, or any communication is interrupted on communication channels 1L, 2L or on the monitoring conductors Mn, within a few moments, an error would be detected which would lead to the execution of an emergency procedure. In other words, a tampering condition cannot be restored locally, but only centrally at the ACC level.

As regards the detection of the opening of the field device casing, it is believed that it is not necessary to produce further information, as numerous strategies are known in the field of burglar alarms and related sensors. Any tampering on the field railway device causes Alice's operation to be blocked.

Preferably, the present invention is applied to a rail switch and the Alice transceiver is inserted inside the so-called control box which acts as a casing for the field device.

The present invention also concerns a method of monitoring and control of a field railway device CdM, such as a rail switch or a rail crossing, etc., through an ACC system in which a Vital Core is arranged in safety NVs and at least one peripheral device DP arranged to receive command information from the Vital Core safely to be sent to the field railway device DFC, via the control conductors Cmd, and to receive from the field railway device, via the monitoring conductors Mn, a first operational state of the same field railway device to be sent to the Safety Vital Core.

The method, performed cyclically continuously, includes the following steps:
- (Step 1) acquisition of a second state of the field device using a quantum key transceiver system (Alice, Bob) and
- (Step 2) acquisition of the first state contemporary with the second state of the field railway device via the monitoring conductors Mn, and then

- (Step 3) comparison of said first and second state and
- (Step 4) using of a comparison result by the Safety Vital Core to decide whether to acquire (OK) or discard (Err) said first state.

Evidently, as described above, when information is discarded, actions are implemented (Step 5) which are known in themselves and are not the subject of the present invention.

The method is exemplified in figure 3.

Failure to receive the first and/or second state by the comparison device results in the discarding of any information received from the group of monitoring electrical conductors. Consequently, an information gap occurs, either due to a fault on a communication channel 1L, 2L or on the monitoring conductors Mn, or due to the detection of tampering in the field railway device.

Constructive variations to the non-limiting example described are possible, without departing from the scope of protection of the present invention, including all the equivalent embodiments for a person skilled in the art, to the contents of the claims.

From the above description, the person skilled in the art is able to realize the object of the invention without introducing further construction details.

## Claims

1. Assembly comprising a command and control system (ACC) of a field railway device and the field railway device (DFC), such as a rail switch (CdM) or a rail crossing, etc, the command and control system comprising a Safety Vital Core (NVs) comprising at least one electronic computer arranged to control the field rail device (DFC) by means of a first set of electrical conductors (CMD) and to monitor a first state of the field rail device by means of a second set of electric conductors (Mn), the assembly being **characterized in that** it comprises
- a first quantum key transceiver (Alice) operatively directly associated with said field rail device (DFC) so as to acquire a second operating state from the field rail device contemporary with said first state,
- a second quantum key transceiver (Bob) operatively interconnected with the first quantum key transceiver, wherein the second transceiver is arranged to receive from the first transceiver said second state of the field rail device, and
- a comparison device (CMPU), operatively connected with
. the second transceiver and with
. the second group of electrical conductors,
and configured to compare the first state with the second state of the field rail device and to provide an estimate of the reliability of the first state information received from the second set of electrical conductors based on said comparison and wherein the Safety Vital Core is configured to acquire or reject the first operating state based on the reliability estimate provided by the comparison device (CMPU) .

2. The assembly according to claim 1, wherein the first transceiver (Alice) and the second transceiver (Bob) are interconnected by a first communication channel
- completely defined by a fiber optic connection or
- partially defined by fiber optic connection and partially based on a laser communication system.

3. The assembly according to claim 1 or 2, wherein the first and second transceivers are configured to use the first communication channel exclusively for an exchange of an encryption quantum key according to a QKD scheme or to use the first communication channel for exchanging also said second state preferably according to a QKR communication scheme.

4. The assembly according to claim 3, wherein when the first and second transceivers are configured to use the first communication channel (1L) exclusively for an encryption quantum key exchange, the first and second transceivers being interconnected by a second communication channel (2L) for exchanging said second state, wherein the second communication channel comprises
- a third group of electrical conductors and/or
- a fiber optic connection and/or
- a WIFI connection,
wherein the first and second transceivers are configured to exchange the second state in encrypted form by means of the quantum key exchanged through the first communication channel.

5. Assembly according to claim 3, wherein when the first and second transceivers are configured to use the first communication channel (1L) to exchange also said second state according to a multiplexed QKD scheme.

6. The assembly according to any one of the preceding claims 1 - 5, wherein said first transceiver is inserted inside a field device enclosure and wherein the field device comprises anti-sabotage means for detecting an opening of the enclosure and for inhibit an operation of the first transceiver and/or of the comparator, when the anti-sabotage means detect said opening.

7. Assembly according to any one of the preceding claims 1 - 6, wherein said comparison device (CMPU) complies with the SIL standard (IEC 61508 and IEC 61511).

8. Assembly according to any one of the preceding claims, wherein said field device is a rail switch.

9. Switch (CdM) comprising means for activating a railway switch and comprising a casing in which the first quantum key transceiver (Alice) according to any one of claims from 1 to 8 is housed.

10. Monitoring and control method of a field railway device (CdM), such as a rail switch or a level crossing, etc., through a central post (ACC) wherein a Safety Vital Core (NVs) is arranged, comprising at least one electronic computer arranged to control the field rail device, by means of a first set of electrical conductors (CMD), and to monitor a first state of the field rail device, by means of a second set of electrical conductors (Mn), the method comprising the following steps:
- acquisition of a second state of the field device using a quantum key transceiver system (Alice, Bob) and
- acquisition of the first state contemporary with the second state of the field railway device by means of said second group of electrical conductors (Mn), and then
- comparison of said first and second state and
- use of a result of the comparison by the Safety Vital Core to decide whether to acquire or discard said first state.
